# EUROPEAN PATENT APPLICATION

(11) **EP 4 426 045 A1**
(43) Date of publication of application: **04.09.2024**
(21) Application number: 21961759.4
(22) Date of filing: 27.10.2021
(51) Int. Cl.: H04W 72/12

(54) **TRANSMISSION CONFIGURATION INDICATION DETERMINATION METHOD AND APPARATUS, AND TERMINAL AND STORAGE MEDIUM**

(71) Applicant: Beijing Xiaomi Mobile Software Co., Ltd., Beijing 100085 (CN)
(72) Inventor: LI, Mingju, Beijing 100085 (CN)
(74) Representative: Stöckeler, Ferdinand
(86) International application number: PCT/CN2021/126807
(87) International publication number: WO 2023/070390

(57) **Abstract**

The present disclosure relates to the technical field of communications. Provided are a transmission configuration indication determination method and apparatus, and a terminal and a storage medium. The method comprises: receiving M pieces of downlink control information (DCI), which are sent by a network device, wherein each of the M pieces of DCI includes a transmission configuration indication (TCI) state, and the M pieces of DCI comprise reference DCI, M being a positive integer; and on the basis of a target TCI state that is included in the reference DCI, determining a unified TCI state that is used in communication transmission. The present disclosure provides a solution for the problem of how to determine a unified TCI that is used in communication transmission, such that a terminal device and a network device reach an agreement regarding a TCI state use time, and the beam consistency is ensured, thereby improving the transmission performance based on a TCI between the terminal device and the network device.

## Description

### TECHNICAL FIELD

The present disclosure relates to the field of communication technologies, and particularly to a method and an apparatus for determining a transmission configuration indication (TCI), a terminal and a storage medium.

### BACKGROUND

In the field of communication technologies, in order to reduce a signaling overhead, usage of a common beam is introduced. For example, if a base station indicates a common beam for downlink, the beam may be used for a physical downlink shared channel (PDSCH) and at least part of a physical downlink control channel (PDCCH), and some downlink reference signals of a terminal. If the base station indicates a common beam for uplink, the beam may be used for a physical uplink shared channel (PUSCH) and at least part of a physical uplink control channel (PUCCH), and some uplink reference signals of the terminal.

In the related art, the common beam is indicated by a transmission configuration indication state (TCI state) in downlink control information (DCI), and it is determined whether information of the common beam is correctly received or not by carrying hybrid automatic repeat request-acknowledge character (HARQ-ACK) information corresponding to the DCI in an HARQ ACK codebook and feeding back the HARQ-ACK information to the base station.

The HARQ-ACK codebook may include HARQ-ACK information corresponding to a plurality of pieces of DCI. When one HARQ-ACK codebook includes the HARQ-ACK information of the plurality of pieces of DCI, and the plurality of pieces of DCI include a TCI state indication, a problem to be solved is to determine HARQ-ACK information of which DCI is used by the terminal to determine using a TCI state in which DCI so as to determine a used common beam.

### SUMMARY

A method and an apparatus for determining a transmission configuration indication (TCI), a terminal and a storage medium are provided according to embodiments of the disclosure, capable of solving a problem of how a terminal determines a common beam used for a communication transmission when a hybrid automatic repeat request-acknowledge character (HARQ-ACK) codebook includes HARQ-ACK information corresponding to a plurality of pieces of DCI. The technical solution is as follow:

According to an aspect of the present disclosure, a method for determining a transmission configuration indication (TCI) is provided, and is applied to a terminal device. The method includes:
receiving M pieces of downlink control information (DCI) from a network device, in which each of the M pieces of DCI includes a TCI state, and the M pieces of DCI include reference DCI, where M is a positive integer; and
determining a unified TCI state used for a communication transmission based on a target TCI state included in the reference DCI.

According to an aspect of the present disclosure, an apparatus for determining a transmission configuration indication (TCI) is provided. The apparatus includes:
a receiving module, configured to receive M pieces of downlink control information (DCI) from a network device, in which each of the M pieces of DCI includes a TCI state, and the M pieces of DCI include reference DCI, where M is a positive integer; and
a determining module, configured to determine a unified TCI state used for a communication transmission based on a target TCI state included in the reference DCI.

According to an aspect of the present disclosure, a terminal is provided, and includes: a processor; and a transceiver connected to the processor; in which the processor is configured to load and execute executable instructions to implement the method for determining the transmission configuration indication (DCI) as described above.

According to an aspect of the present disclosure, a computer-readable storage medium is provided. The computer-readable storage medium stores at least one instruction, at least one program, a code set or an instruction set, the at least one instruction, the at least one program, the code set or the instruction set being loaded and executed by the processor to implement the method for determining the TCI as described above.

The technical solution according to embodiments of the present disclosure at least includes the following beneficial effect.

When the terminal device receives the M pieces of DCI from the network device, and each of the M pieces of DCI includes the TCI state, the terminal device determines the common beam used for the communication transmission according to the TCI state included in the reference DCI in the M pieces of DCI, where M is a positive integer. That is, a solution for the problem about how to determine the common beam used for the communication transmission is provided, so that the terminal device and the network device reach an agreement in a use time of the TCI state, which ensures beam consistency, and enhances a beam-based transmission performance between the terminal device and the network device.

### BRIEF DESCRIPTION OF THE DRAWINGS

In order to explain the technical solutions in embodiments of the present disclosure more clearly, the drawings described in the embodiments will be briefly introduced below. Obviously, the drawings described as below are only some embodiments of the present disclosure. Those skilled in the art may obtain other drawings from these drawings without creative work.
FIG. 1 is a diagram illustrating a communication system according to an example embodiment of the disclosure.
FIG. 2 is a flowchart illustrating a method for determining a transmission configuration indication (TCI) according to an example embodiment of the disclosure.
FIG. 3 is a flowchart illustrating a method for determining a transmission configuration indication (TCI) according to another example embodiment of the disclosure.
FIG. 4 is a flowchart illustrating a method for determining a transmission configuration indication (TCI) according to another example embodiment of the disclosure.
FIG. 5 is a flowchart illustrating a method for determining a transmission configuration indication (TCI) according to another example embodiment of the disclosure.
FIG. 6 is a flowchart illustrating a method for determining a transmission configuration indication (TCI) according to another example embodiment of the disclosure.
FIG. 7 is a flowchart illustrating a method for determining a transmission configuration indication (TCI) according to another example embodiment of the disclosure.
FIG. 8 is a block diagram illustrating a structure of an apparatus for determining a transmission configuration indication (TCI) according to an example embodiment of the disclosure.
FIG. 9 is a block diagram illustrating a structure of an apparatus for determining a transmission configuration indication (TCI) according to another example embodiment of the disclosure.
FIG. 10 is a diagram illustrating a structure of a communication device according to an example embodiment of the disclosure.

### DETAILED DESCRIPTION

In order to make the purpose, technical solutions and advantages of the present disclosure more clear, the embodiments of the present disclosure will be further described below in connection with accompanying drawings.

The example embodiments will be described here, and examples thereof are shown in attached drawings. When the following descriptions refer to the accompanying drawings, same numbers in different drawings represent same or similar elements unless otherwise indicated. The implementations described in the following exemplary embodiments do not represent all possible implementations consistent with embodiments of the present disclosure. Rather, they are merely examples of apparatuses and methods consistent with some aspects of the disclosure as detailed in the appended claims.

The terms described in the present disclosure are only for the purpose of describing specific embodiments and are not intended to limit the present disclosure. The singular forms "a", "the" and "said" used in the disclosure and the attached claim are also intended to include plural forms, unless the context clearly indicates otherwise. It should also be understood that the term "and/or" used in the present disclosure means and includes any or all possible combinations of one or more associated listed items.

It should be understood that, although the terms first, second, third, etc. may be used in this disclosure to describe various information, such information shall not be limited to these terms. These terms are only used to distinguish the same category of information. For example, subject to the scope of this present disclosure, first information may also be referred to as second information, and similarly, and second information may also be referred to as first information. It depends on the context. For example, the word "if' as used herein may be interpreted as "in a case that" or "when" or "in response to determining".

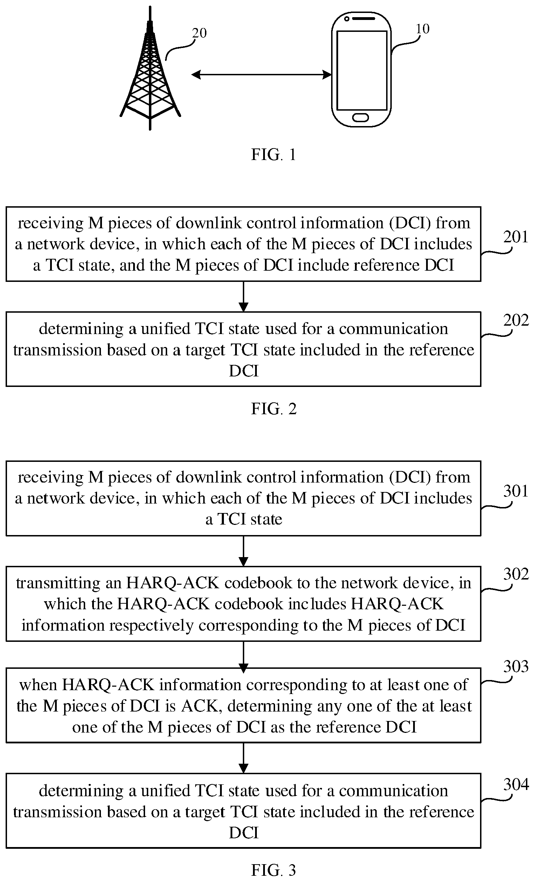

FIG. 1 illustrates a diagram of a communication system in an embodiment of the present disclosure. The communication system may include a terminal device 10 and a network device 20.

A number of the terminal devices 10 is generally more than one, and one or more terminal devices 10 may be distributed in a cell managed by each network device 20. The terminal device 10 may include all kinds of handheld devices, vehicle-mounted devices, wearable devices, computing devices with a wireless communication function or other processing devices connected to wireless modems, as well as various forms of user equipments (UE), mobile stations (MS), etc. For convenience of description, in embodiments of the disclosure, the devices mentioned above are collectively referred to as a terminal device.

The network device 20 is an apparatus deployed in an access network that provides a wireless communication function for the terminal device 10. The network device 20 may include various forms of macro base stations, micro base stations, relay stations, and access points. In systems adopting different wireless access technologies, names of devices with a network device function may vary, for example, in a 5G NR system, the device is referred to as gNodeB or gNB. With evolution of communication technologies, the name of the "network device" may vary. For convenience of description, in embodiments of the present disclosure, the above apparatuses that provide a wireless communication function for the terminal device 10 are collectively referred to as a network device. A connection may be established between the network device 20 and the terminal device 10 via an air interface, so that communication is performed via the connection, including interaction between signalings and data. There may be a plurality of network devices 20, and two adj acent network devices 20 may be wired or wirelessly communicated. The terminal device 10 may be switched between different network devices 20, that is, may establish a connection with different network devices 20.

A "5G NR system" in embodiments of the disclosure may be also referred to as a 5G system or an NR system, which may be understood by those skilled in the art. The technical solution in embodiments of the disclosure may be applicable to the 5G NR system, and may also be applicable to a subsequent evolution system of the 5G NR system.

In a new radio (NR), in particularly, when a communication frequency band is within a frequency range 2, due to fast attenuation of a high-frequency channel, in order to ensure a coverage area, it is required to use a beam-based transmission and reception.

In Rel-16, a TCI state of any one of a PDCCH, a PDSCH, a PUSCH, a PUCCH or a reference signal or any combination of those is independently indicated. The above reference signal includes a channel state information reference signal (CSI-RS), a sounding reference signal (SRS), a positioning reference signal (PRS), a tracking reference signal (TRS), etc. The CSI-RS includes a CSI-RS for channel state information measurement, a CSI-RS for beam measurement, or a CSI-RS for path loss estimation, and further includes a periodically transmitted CSI-RS, a semi-persistent transmitted CSI-RS, and a non-periodically transmitted CSI-RS. The SRS includes an SRS for channel state information measurement based on a codebook or a non-codebook, an SRS for beam measurement, or an SRS for positioning measurement, and further includes a periodically transmitted SRS, a semi-persistent transmitted SRS, and a non-periodically transmitted SRS. And the PDCCH and PUCCH activate one TCI state using a MAC control element (MAC CE). And the PDSCH and the PUSCH indicate their respective TCI states via DCI signalings.

In order to reduce a signaling overhead, it is desirable to use a unified/common TCI state. If the base station indicates a unified TCI state for downlink, the TCI state may be used for a PDSCH and at least part of a PDCCH (such as a user equipment dedicated PDCCH) and some downlink reference signals of the terminal. If the base station indicates a unified TCI state for uplink, the TCI state may be used for a PUSCH and at least part of the PUCCH and some uplink reference signals of the terminal. The unified TCI state may be separately indicated by a separate uplink (UL) TCI state and a separate downlink (DL) TCI state or jointly indicated by an uplink and downlink joint TCI state. The separate UL TCI state is applicable to an uplink channel and/or signal, the separate DL TCI state is applicable to a downlink channel and/or signal, and the joint TCI state is applicable to uplink and downlink channels and/or signals simultaneously.

At present, it is agreed to indicate the unified TCI state using DCI, and it is determined whether the unified TCI state information is correctly received based on HARQ-ACK information corresponding to the DCI in the HARQ-ACK codebook. One HARQ-ACK codebook may include HARQ-ACK information corresponding to DCI in a plurality of slots on a plurality of component carriers (CCs) i.e. serving cells. And HARQ-ACK information corresponding to DCI in each slot on each CC uses an independent bit. When a plurality of pieces of DCI corresponding to HARQ-ACK information included in one HARQ-ACK codebook include a TCI state indication, a problem to be solved is to determine HARQ-ACK information of which DCI is used by the terminal to determine using a TCI state in which DCI so as to determine a used common beam.

Based on this, a method for determining a TCI is provided in the disclosure. A solution of how a terminal determines a unified transmission configuration indication used for a communication transmission when a plurality of pieces of DCI corresponding to HARQ-ACK information included in one HARQ-ACK codebook include a TCI state indication, is provided. The technical solution provided in the present disclosure is described in several embodiments below.

FIG. 2 illustrates a flowchart of a method for determining a transmission configuration indication (TCI) according to an embodiment of the disclosure. The method is applicable to a terminal device in a communications system as illustrated in FIG. 1. The method may include following steps.

At step 201, M pieces of downlink control information (DCI) from a network device are received. Each of the M pieces of DCI includes a TCI state. The M pieces of DCI include reference DCI.

The M pieces of DCI are used to indicate using a unified TCI between the terminal device and the network device for the communication transmission, where M is a positive integer.

Optionally, the above TCI state includes at least one of a unified TCI state, a joint TCI state, a separate uplink TCI state, or a separate downlink TCI state.

For example, the M pieces of DCI are transmitted by the network device on at least one time unit via a resource on at least one component carrier (CC) and/or bandwidth part (BWP).

Optionally, the reference DCI may be specified by the network device, or may be preset by the terminal device, or may be determined by the terminal device according to a HARQ-ACK codebook corresponding to the M pieces of DCI. The HARQ-ACK codebook is generated by the terminal device according to a receiving condition of each of the M pieces of DCI or a receiving condition of a PDSCH scheduled by each of the M pieces of DCI after the terminal device receives the M pieces of DCI.

At step 202, a unified TCI state used for a communication transmission is determined based on a target TCI state included in the reference DCI.

For example, the reference DCI corresponds to the target TCI state.

Optionally, the communication transmission includes an uplink transmission or a downlink transmission of a communication channel, and an uplink transmission or a downlink transmission of a reference signal. In some embodiments, the communication transmission corresponds to a TCI state included in the DCI. When the TCI state is the unified TCI state, the communication transmission includes the uplink transmission or the downlink transmission of the communication channel and the uplink transmission or the downlink transmission of the reference signal. When the TCI state is the joint TCI state, the communication transmission includes the uplink transmission or the downlink transmission of the communication channel and the uplink transmission or the downlink transmission of the reference signal. When the TCI state is the separate uplink TCI state, the communication transmission is the uplink transmission of the communication channel and the uplink transmission of the reference signal. When the TCI state is the separate downlink TCI state, the communication transmission is the downlink transmission of the communication channel and the downlink transmission of the reference signal.

In some embodiments, when the reference DCI is determined according to the HARQ-ACK codebook corresponding to the M pieces of DCI, the terminal device determines the unified TCI used for the communication transmission based on the target TCI state included in the reference DCI after a target time interval (a T time) after transmitting the HARQ-ACK codebook. The HARQ-ACK information corresponding to the reference DCI included in the HARQ-ACK codebook is ACK, that is, information of the unified TCI indicated by the reference DCI is correctly received.

The target time interval may be specified by the network device, or preset by the terminal device, or specified based on a protocol. The target time interval may be N transmission symbols.

In summary, in the method for determining the TCI according to embodiments of the disclosure, when the terminal device receives the M pieces of DCI from the network device, and each of the M pieces of DCI includes the TCI state, the terminal device determines the unified TCI used for the communication transmission according to the TCI state included in the reference DCI in the M pieces of DCI, where M is a positive integer. That is, a solution for the problem of how to determine the unified TCI used for the communication transmission is provided, so that the terminal device and the network device reach an agreement in a use time of the TCI state, which ensures consistency of the TCI, and enhances TCI-based transmission performance between the terminal device and the network device.

FIG. 3 illustrates a flowchart of a method for determining a transmission configuration indication (TCI) according to an embodiment of the disclosure. In embodiments of the disclosure, TCI states included in all of the M pieces of DCI from a terminal device are same, where M is a positive integer. The method may include following steps.

At step 301, M pieces of DCI from a network device are received. Each of the M pieces of DCI includes a TCI state.

The M pieces of DCI are used to indicate using a unified TCI between the terminal device and the network device for a communication transmission, where M is a positive integer.

Optionally, the above TCI state includes at least one of a unified TCI state, a joint TCI state, a separate uplink TCI state, or a separate downlink TCI state.

For example, the M pieces of DCI are transmitted by the network device on at least one time unit via a resource on at least one component carrier (CC) and/or bandwidth part (BWP). The time unit includes a slot or X symbols. The X symbols are less than one slot, that is, X is less than 14 or 12.

At step 302, an HARQ-ACK codebook is transmitted to the network device. The HARQ-ACK codebook includes HARQ-ACK information respectively corresponding to the M pieces of DCI.

Optionally, the HARQ-ACK codebook further includes HARQ-ACK information corresponding to K pieces of DCI. The K pieces of DCI are pieces of DCI without including a TCI state indication, where K is a positive integer.

Optionally, the HARQ-ACK information corresponding to the M pieces of DCI may be ACK or NACK. When the HARQ-ACK information is ACK, it indicates that the terminal device has correctly received a unified TCI indicated by the DCI and/or correctly received a PDSCH scheduled by the DCI. When the HARQ-ACK information is NACK, it indicates that the terminal device have not correctly receive the unified TCI indicated by the DCI and/or have not correctly receive the PDSCH scheduled by the DCI.

At step 303, when HARQ-ACK information corresponding to at least one of the M pieces of DCI is ACK, any one of the at least one of the M pieces of DCI is determined as the reference DCI.

In embodiments of the disclosure, TCI states included in all of the M pieces of DCI are same.

When unified TCI information indicated by at least one of the M pieces of DCI with a same TCI state is correctly received, any one of at least one of the M pieces of DCI is determined as the reference DCI.

Illustratively, the HARQ-ACK codebook is shown as a first row in Table one. A second row in Table one represents a DCI number corresponding to HARQ-ACK information, a third row represents a TCI state number indicated in each piece of DCI, a fourth row indicates a CC corresponding to a frequency domain resource of each piece of DCI, and a fifth row represents a slot number of each DCI transmission. In Table one, TCI states corresponding to all pieces of DCI are TCI state#0, and HARQ-ACK information corresponding to DCI#2, DCI#4, DCI#5 and DCI#6 is ACK, in which case the reference DCI is any one of DCI#2, DCI#4, DCI#5, or DCI #6.

**Table One**

| NACK | ACK | NACK | ACK | ACK | ACK |
|---|---|---|---|---|---|
| DCI#1 | DCI#2 | DCI#3 | DCI#4 | DCI#5 | DCI#6 |
| TCI state#0 | TCI state#0 | TCI state#0 | TCI state#0 | TCI state#0 | TCI state#0 |
| on CC1 | on CC2 | on CC3 | on CC1 | on CC2 | on CC3 |
| slot#1 | slot#1 | slot#1 | slot#2 | slot#2 | slot#2 |

At step 304, a unified TCI state used for a communication transmission is determined based on a target TCI state included in the reference DCI.

For example, the reference DCI corresponds to the target TCI state.

Optionally, the communication transmission includes an uplink transmission or a downlink transmission of a communication channel, and an uplink transmission or a downlink transmission of a reference signal.

In embodiments of the disclosure, the terminal device determines the unified TCI used for the communication transmission based on the target TCI state included in the reference DCI after a target time interval (a T time) after transmitting the HARQ-ACK codebook. The HARQ-ACK information corresponding to the reference DCI included in the HARQ-ACK codebook is ACK, that is, information of the unified TCI indicated by the reference DCI is correctly received.

The target time interval may be specified by the network device, or preset by the terminal device, or specified based on a protocol. The target time interval may be N transmission symbols.

In summary, in the method for determining the TCI according to embodiments of the disclosure, when the terminal device receives the M pieces of DCI from the network device, and each of the M pieces of DCI includes the TCI state, the terminal device determines the unified TCI used for the communication transmission according to the TCI state included in the reference DCI in the M pieces of DCI, where M is a positive integer. That is, when the HARQ-ACK codebook includes the HARQ-ACK information corresponding to the plurality of pieces of DCI, a solution for the problem of how to determine the unified TCI used for the communication transmission is provided, so that the terminal device and the network device reach an agreement in a use time of the TCI state, which ensures consistency of the TCI, and enhances TCI-based transmission performance between the terminal device and the network device.

In embodiments of the disclosure, when HARQ-ACK information corresponding to one piece of DCI is ACK in the HARQ-ACK codebook, the terminal may start to use the TCI state indicated in the reference DCI to determine the unified TCI used for the communication transmission after the target time interval after transmitting the ACK.

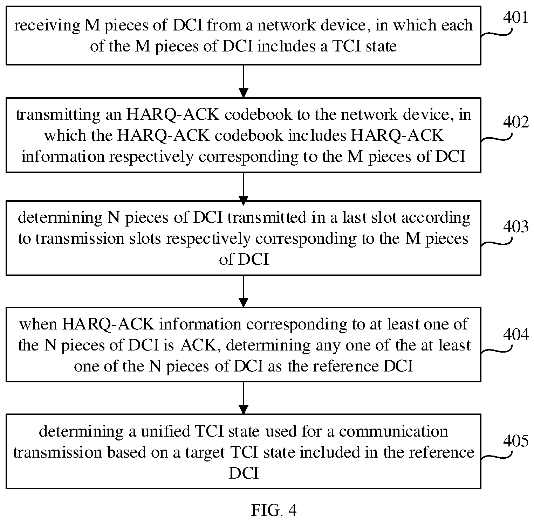

FIG. 4 illustrates a flowchart of a method for determining a transmission configuration indication (TCI) according to an embodiment of the disclosure. In embodiments of the disclosure, TCI states included in N pieces of DCI transmitted in a last slot of transmission slots respectively corresponding to M pieces of DCI are same, where N and M are positive integers. The method may include following steps.

At step 401, M pieces of DCI from a network device are received. Each of the M pieces of DCI includes a TCI state.

The M pieces of DCI are used to indicate using a unified TCI between the terminal device and the network device for a communication transmission, where M is a positive integer.

Optionally, the above TCI state includes at least one of a unified TCI state, a joint TCI state, a separate uplink TCI state, or a separate downlink TCI state.

For example, the M pieces of DCI are transmitted by the network device on at least one time unit via a resource on at least one component carrier (CC) and/or bandwidth part (BWP).

At step 402, an HARQ-ACK codebook is transmitted to the network device. The HARQ-ACK codebook includes HARQ-ACK information respectively corresponding to the M pieces of DCI.

Optionally, the HARQ-ACK codebook further includes HARQ-ACK information corresponding to K pieces of DCI. The K pieces of DCI are pieces of DCI without including a TCI state indication, where K is a positive integer.

Optionally, the HARQ-ACK information may be ACK or NACK.

At step 403, N pieces of DCI transmitted in a last slot are determined according to transmission slots respectively corresponding to the M pieces of DCI.

The terminal device acquires the transmission slots respectively corresponding to the M pieces of DCI, and determines N pieces of DCI transmitted in the last slot. The TCI states included in the N pieces of DCI are same, where N is a positive integer.

In embodiments of the disclosure, it is only illustrated by taking the last slot for example. In some embodiments, the last slot may be replaced by a first slot or any one slot specified in all slots, which will not be limited.

At step 404, when HARQ-ACK information corresponding to at least one of the N pieces of DCI is ACK, any one of at least one of the N pieces of DCI is determined as the reference DCI.

In embodiments of the disclosure, M pieces of DCI corresponds to transmission slots respectively. One of the M pieces of DCI only corresponds to one transmission slot. The one slot may be used to transmit a plurality of pieces of DCI.

In embodiments of the disclosure, TCI states included in N pieces of DCI transmitted in the last slot of the transmission slots corresponding to the M pieces of DCI are same.

When HARQ-ACK information corresponding to at least one of the N pieces of DCI transmitted in the last slot is ACK, any one of at least one of the N pieces of DCI is determined as reference DCI.

Illustratively, the HARQ-ACK codebook is shown as a first row in Table two. A second row in Table two represents a DCI number corresponding to HARQ-ACK information, a third row represents a TCI state number indicated in each piece of DCI, a fourth row indicates a CC corresponding to a frequency domain resource of each piece of DCI, and a fifth row represents a slot number of each DCI transmission. In Table two, TCI states of DCI#4, DCI#5 and DCI#6 transmitted in the last slot slot#2 are TCI state#0, and HARQ-ACK information corresponding to DCI#4 and DCI#6 is ACK, in which case, any one of DCI#4 or DCI#6 is determined as the reference DCI.

**Table Two**

| NACK | ACK | NACK | ACK | NACK | ACK |
|---|---|---|---|---|---|
| DCI#1 | DCI#2 | DCI#3 | DCI#4 | DCI#5 | DCI#6 |
| TCI state#1 | TCI state#2 | TCI state#3 | TCI state#0 | TCI state#0 | TCI state#0 |
| on CC1 | on CC2 | on CC3 | on CC1 | on CC2 | on CC3 |
| slot#1 | slot#1 | slot#1 | slot#2 | slot#2 | slot#2 |

In some embodiments, when HARQ-ACK information of at least one of the N pieces of DCI is ACK, at least one of the N pieces of DCI is determined as the reference DCI.

At step 405, a unified TCI state used for a communication transmission is determined based on a target TCI state included in the reference DCI.

Optionally, the communication transmission includes an uplink transmission or a downlink transmission of a communication channel, and an uplink transmission or a downlink transmission of a reference signal.

In embodiments of the disclosure, the terminal device determines the unified TCI used for the communication transmission based on the target TCI state included in the reference DCI after a target time interval (a T time) after transmitting the HARQ-ACK codebook. The HARQ-ACK information corresponding to the reference DCI included in the HARQ-ACK codebook is ACK, that is, information of the unified TCI indicated by the reference DCI is correctly received.

The target time interval may be specified by the network device, or preset by the terminal device, or specified based on a protocol. The target time interval may be N transmission symbols.

In summary, in the method for determining the TCI according to embodiments of the disclosure, when the terminal device receives the M pieces of DCI from the network device, and each of the M pieces of DCI includes the TCI state, the terminal device determines the unified TCI used for the communication transmission according to the TCI state included in the reference DCI in the M pieces of DCI, where M is a positive integer. That is, when the HARQ-ACK codebook includes the HARQ-ACK information corresponding to the plurality of pieces of DCI, a solution for the problem of how to determine the unified TCI used for the communication transmission is provided, so that the terminal device and the network device reach an agreement in a use time of the TCI state, which ensures consistency of the TCI, and enhances TCI-based transmission performance between the terminal device and the network device.

In embodiments of the disclosure, as long as HARQ-ACK information corresponding to one piece of DCI in the piece of DCI transmitted in the last slot is ACK in the HARQ-ACK codebook, the terminal may start to use the TCI state indicated in the reference DCI to determine a common beam used for a communication transmission after the target time interval after transmitting the ACK.

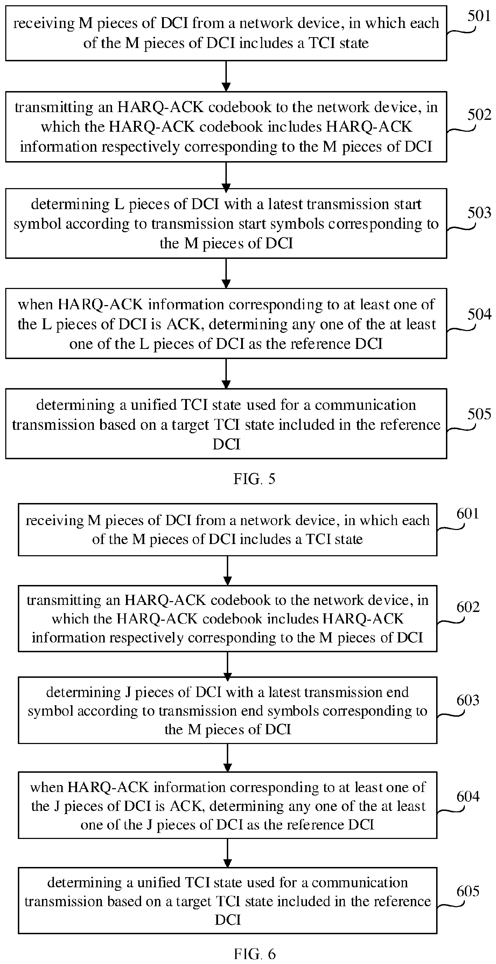

FIG. 5 illustrates a flowchart of a method for determining a transmission configuration indication (TCI) according to an embodiment of the disclosure. In embodiments of the disclosure, TCI states included in L pieces of DCI with a last transmission start symbol respectively corresponding to the M pieces of DCI from the terminal device are same, where L and M are positive integers. The method may include following steps.

At step 501, M pieces of DCI from a network device are received. Each of the M pieces of DCI includes a TCI state.

The M pieces of DCI are used to indicate using a unified TCI between the terminal device and the network device for a communication transmission, where M is a positive integer.

Optionally, the above TCI state includes at least one of a unified TCI state, a joint TCI state, a separate uplink TCI state, or a separate downlink TCI state.

For example, the M pieces of DCI are sent by the network device on at least one time unit via a resource on at least one component carrier (CC) and/or bandwidth part (BWP).

At step 502, an HARQ-ACK codebook is transmitted to the network device. The HARQ-ACK codebook includes HARQ-ACK information respectively corresponding to the M pieces of DCI.

Optionally, the HARQ-ACK codebook further includes HARQ-ACK information corresponding to K pieces of DCI. The K pieces of DCI are pieces of DCI without including a TCI state indication, where K is a positive integer.

Optionally, the HARQ-ACK information may be ACK or NACK.

At step 503, L pieces of DCI with a last transmission start symbol are determined according to transmission start symbols corresponding to the M pieces of DCI.

The terminal device determines the transmission start symbols corresponding to the M pieces of DCI, and determines the L pieces of DCI with the last transmission start symbol from the transmission start symbols corresponding to the M pieces of DCI. The TCI states included in the L pieces of DCI are same, where L is a positive integer.

Optionally, the DCI with the last transmission start symbol may be DCI with the last transmission start symbol in a first slot of transmitting the DCI, or may be DCI with the last transmission start symbol in a last slot of transmitting the DCI, or may be DCI with the last transmission start symbol in any one specified slot in slots of transmitting the DCI, which will not be limited in the disclosure.

In embodiments of the disclosure, it is illustrated only by taking the last transmission start symbol for example. In some embodiments, the DCI with the last transmission start symbol may be replaced by DCI with an earliest transmission start symbol, which will not be limited.

At step 504, when HARQ-ACK information corresponding to at least one of the L pieces of DCI is ACK, any one of at least one of the L pieces of DCI is determined as the reference DCI.

In embodiments of the disclosure, M pieces of DCI corresponds to transmission slots respectively. One of the M pieces of DCI only corresponds to one transmission slot. The one slot may be configured to transmit a plurality of pieces of DCI. The DCI transmitted in the same slot may correspond to different transmission start symbols.

In embodiments of the disclosure, TCI states included in the L pieces of DCI with a last transmission start slot corresponding to the M pieces of DCI are same. The L pieces of DCI are L pieces of DCI with a last transmission start symbol in pieces of DCI with a transmission slot being a last slot in the M pieces of DCI.

When HARQ-ACK information corresponding to at least one of the L pieces of DCI with the last transmission start symbol is ACK, any one of at least one of the L pieces of DCI is determined as the reference DCI.

Illustratively, the HARQ-ACK codebook is shown as a first row in Table three. A second row in Table three represents a DCI number corresponding to HARQ-ACK information, a third row represents a TCI state number indicated in each piece of DCI, a fourth row indicates a CC corresponding to a frequency domain resource of each piece of DCI, and a fifth row represents a slot number of each DCI transmission. In Table three, a slot slot#2 is the last slot, a last start symbol of DCI is symbol#7, and the corresponding DCI includes DCI#5 and DCI#6. When HARQ-ACK information corresponding to DCI#6 is ACK, DCI#6 may be determined as reference DCI.

**Table Three**

| NACK | ACK | NACK | ACK | NACK | ACK |
|---|---|---|---|---|---|
| DCI#1 | DCI#2 | DCI#3 | DCI#4 | DCI#5 | DCI#6 |
| TCI state#0 | TCI state#0 | TCI state#0 | TCI state#4 | TCI state#0 | TCI state#0 |
| on CC1 | on CC2 | on CC3 | on CC1 | on CC2 | on CC3 |
| slot#1 | slot#1 | slot#1 | slot#2 | slot#2 | slot#2 |
| | | | symbol#0 | symbol#7 | symbol#7 |

In some embodiments, when HARQ-ACK information of at least one of the L pieces of DCI is ACK, any one of at least one of the L pieces of DCI is determined as the reference DCI.

At step 505, a unified TCI state used for a communication transmission is determined based on a target TCI state included in the reference DCI.

Optionally, the communication transmission includes an uplink transmission or a downlink transmission of a communication channel, and an uplink transmission or a downlink transmission of a signal.

In embodiments of the disclosure, the terminal device determines the unified TCI used for the communication transmission based on the target TCI state included in the reference DCI after a target time interval (a T time) after transmitting the HARQ-ACK codebook. The HARQ-ACK information corresponding to the reference DCI included in the HARQ-ACK codebook is ACK, that is, information of the unified TCI indicated by the reference DCI is correctly received.

The target time interval may be specified by the network device, or preset by the terminal device, or specified based on a protocol. The target time interval may be N transmission symbols.

In summary, in the method for determining the TCI according to embodiments of the disclosure, when the terminal device receives the M pieces of DCI from the network device, and each of the M pieces of DCI includes the TCI state, the terminal device determines the unified TCI used for the communication transmission according to the TCI state included in the reference DCI in the M pieces of DCI, where M is a positive integer. That is, when the HARQ-ACK codebook includes the HARQ-ACK information corresponding to the plurality of pieces of DCI, a solution for the problem of how to determine the unified TCI used for the communication transmission is provided, so that the terminal device and the network device reach an agreement in a use time of the TCI state, which ensures consistency of the TCI, and enhances TCI-based transmission performance between the terminal device and the network device.

In embodiments of the disclosure, as long as HARQ-ACK information corresponding to one piece of DCI with a last transmission start symbol is ACK in the HARQ-ACK codebook, the terminal may start to use the TCI state indicated in the reference DCI to determine the unified TCI used for the communication transmission after the target time interval after transmitting the ACK.

FIG. 6 illustrates a flowchart of a method for determining a transmission configuration indication (TCI) according to an embodiment of the disclosure. In embodiments of the disclosure, TCI states included in J pieces of DCI with a last transmission end symbol respectively corresponding to M pieces of DCI from a terminal device are same, where J and M are positive integers. The method may include following steps.

At step 601, M pieces of DCI from a network device are received. Each of the M pieces of DCI includes a TCI state.

The M pieces of DCI are used to indicate using a unified TCI between the terminal device and the network device for a communication transmission, where M is a positive integer.

Optionally, the above TCI state includes at least one of a unified TCI state, a joint TCI state, a separate uplink TCI state, or a separate downlink TCI state.

For example, the M pieces of DCI are transmitted by the network device on at least one time unit via a resource on at least one component carrier (CC) and/or bandwidth part (BWP).

At step 602, an HARQ-ACK codebook is transmitted to the network device. The HARQ-ACK codebook includes HARQ-ACK information respectively corresponding to the M pieces of DCI.

Optionally, the HARQ-ACK codebook further includes HARQ-ACK information corresponding to K pieces of DCI. The K pieces of DCI are pieces of DCI without including a TCI state indication, where K is a positive integer.

Optionally, the HARQ-ACK information may be ACK or NACK.

At step 603, J pieces of DCI with a last transmission end symbol are determined according to transmission end symbols corresponding to the M pieces of DCI.

The terminal device acquires the transmission end symbols corresponding to the M pieces of DCI, and determines J pieces of DCI with a last transmission end symbol from the transmission start symbols corresponding to the M pieces of DCI. The TCI states included in the J pieces of DCI are same, where J is a positive integer.

Optionally, the DCI with the last transmission end symbol may be DCI with the last transmission end symbol in a first slot of transmitting the DCI, or DCI with the last transmission end symbol in a last slot of transmitting the DCI, or DCI with the last transmission end symbol in any one specified slot in slots of transmitting the DCI.

In embodiments of the disclosure, it is illustrated only by taking the last transmission end symbol for example. In some embodiments, the DCI with the last transmission end symbol may be replaced by the DCI with an earliest transmission end symbol, which will not be limited.

At step 604, when HARQ-ACK information corresponding to at least one of the J pieces of DCI is ACK, any one of at least one of the J pieces of DCI is determined as the reference DCI.

In embodiments of the disclosure, M pieces of DCI corresponds to transmission slots respectively. One of the M pieces of DCI only corresponds to one transmission slot. The one slot may be configured to transmit a plurality of pieces of DCI. The plurality of pieces of DCI transmitted in the same slot may correspond to different transmission end symbols.

In embodiments of the disclosure, TCI states included in the J pieces of DCI with the last transmission end slot corresponding to the M pieces of DCI are same. The J pieces of DCI are J pieces of DCI with a last transmission end symbol in pieces of DCI with a transmission slot being a last slot in the M pieces of DCI.

When HARQ-ACK information corresponding to at least one of the J pieces of DCI with the last transmission end symbol is ACK, any one of at least one of the J pieces of DCI is determined as the reference DCI.

Illustratively, the HARQ-ACK codebook is shown as a first row in Table four. A second row in Table four represents a DCI number corresponding to HARQ-ACK information, a third row represents a TCI state number indicated in each piece of DCI, a fourth row indicates a CC corresponding to a frequency domain resource of each piece of DCI, and a fifth row represents a slot number of each DCI transmission. In Table four, a slot slot#2 is a last slot, a last end symbol is symbol#9, and the corresponding DCI includes DCI#5 and DCI#6. When HARQ-ACK information corresponding to DCI#6 is ACK, DCI#6 may be determined as reference DCI.

**Table Four**

| NACK | ACK | NACK | ACK | NACK | ACK |
|---|---|---|---|---|---|
| DCI#1 | DCI#2 | DCI#3 | DCI#4 | DCI#5 | DCI#6 |
| TCI state#0 | TCI state#0 | TCI state#0 | TCI state#4 | TCI state#0 | TCI state#0 |
| on CC1 | on CC2 | on CC3 | on CC1 | on CC2 | on CC3 |
| slot#1 | slot#1 | slot#1 | slot#2 | slot#2 | slot#2 |
| | | | symbol#3 | symbol#9 | symbol#9 |

In some embodiments, when HARQ-ACK information of at least one of the J pieces of DCI is ACK, any one of at least one of the J pieces of DCI is determined as the reference DCI.

At step 605, a unified TCI state used for a communication transmission is determined based on a target TCI state included in the reference DCI.

Optionally, the communication transmission includes an uplink transmission or a downlink transmission of a communication channel, and an uplink transmission or a downlink transmission of a reference signal.

In embodiments of the disclosure, the terminal device determines the unified TCI used for the communication transmission based on the target TCI state included in the reference DCI after a target time interval (a T time) after transmitting the HARQ-ACK codebook. The HARQ-ACK information corresponding to the reference DCI included in the HARQ-ACK codebook is ACK, that is, information of the unified TCI indicated by the reference DCI is correctly received.

The target time interval may be specified by the network device, or preset by the terminal device, or specified based on a protocol. The target time interval may be N transmission symbols.

In summary, in the method for determining the TCI according to embodiments of the disclosure, when the terminal device receives the M pieces of DCI from the network device, and each of the M pieces of DCI includes the TCI state, the terminal device determines the unified TCI used for the communication transmission according to the TCI state included in the reference DCI in the M pieces of DCI, where M is a positive integer. That is, when the HARQ-ACK codebook includes the HARQ-ACK information corresponding to the plurality of pieces of DCI, a solution for the problem of how to determine the unified TCI used for the communication transmission is provided, so that the terminal device and the network device reach an agreement in a use time of the TCI state, which ensures consistency of the TCI, and enhances TCI-based transmission performance between the terminal device and the network device.

In embodiments of the disclosure, as long as HARQ-ACK information corresponding to one piece of DCI with a last end symbol is ACK in the HARQ-ACK codebook, the terminal may start to use the TCI state indicated in the reference DCI to determine the unified TCI used for the communication transmission after the target time interval after transmitting the ACK.

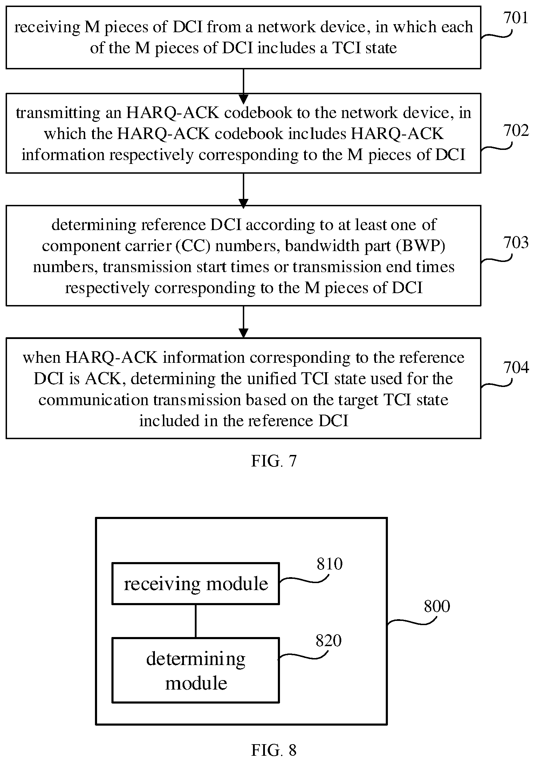

FIG. 7 illustrates a flowchart of a method for determining a transmission configuration indication (TCI) according to an example embodiment. The method may include following steps.

At step 701, M pieces of DCI from a network device are received. Each of the M pieces of DCI includes a TCI state.

The M pieces of DCI are used to indicate using a unified TCI between the terminal device and the network device for a communication transmission, where M is a positive integer.

Optionally, the above TCI state includes at least one of a unified TCI state, a joint TCI state, a separate uplink TCI state, or a separate downlink TCI state.

For example, the M pieces of DCI are transmitted by the network device on at least one time unit via a resource on at least one component carrier (CC) and/or bandwidth part (BWP).

At step 702, an HARQ-ACK codebook is transmitted to the network device. The HARQ-ACK codebook includes HARQ-ACK information respectively corresponding to the M pieces of DCI.

Optionally, the HARQ-ACK codebook further includes HARQ-ACK information corresponding to K pieces of DCI. The K pieces of DCI are pieces of DCI without including a TCI state indication, where K is a positive integer.

Optionally, the HARQ-ACK information may be ACK or NACK.

At step 703, reference DCI is determined according to at least one of component carrier (CC) numbers, bandwidth part (BWP) numbers, transmission start times or transmission end times respectively corresponding to the M pieces of DCI.

Optionally, there is at least one of following methods for determining reference DCI.

In a first method, DCI with a minimum CC number in the M pieces of DCI is determined as the reference DCI.

In a second method, DCI with a minimum bandwidth part (BWP) number in the M pieces of DCI is determined as the reference DCI.

In a third method, DCI with a last transmission start time in the M pieces of DCI is determined as the reference DCI.

In some embodiments, the M pieces of DCI respectively correspond to transmission start times. The transmission start time indicates a start slot or a start symbol when the network device transmits the DCI to the terminal device.

In a fourth method, DCI with a last transmission end time in the M pieces of DCI is determined as the reference DCI.

In some embodiments, the M pieces of DCI respectively correspond to transmission end times. The transmission end time indicates an end slot or an end symbol when the network device transmits the DCI to the terminal device.

In a fifth method, DCI with an earliest transmission start time in the M pieces of DCI is determined as the reference DCI.

In some embodiments, the M pieces of DCI respectively correspond to transmission start times. The transmission start time indicates a start slot or a start symbol when the network device transmits the DCI to the terminal device.

In a sixth method, DCI with an earliest transmission end time in the M pieces of DCI is determined as the reference DCI.

In some embodiments, the M pieces of DCI respectively correspond to transmission end times. The transmission end time indicates an end slot or an end symbol when the network device transmits the DCI to the terminal device.

Illustratively, the reference DCI may be determined according to one of the CC number, the BWP number, the transmission start time or the transmission end time, or may be determined according to any combination of the CC number, the BWP number, the transmission start time or the transmission end time, which is not limited here.

When the reference DCI is determined according to the combination, a plurality of pieces of candidate DCI may be determined according to each of the combination, and the reference DCI may be determined from the plurality of pieces of candidate DCI according to the combination.

For example, taking a combination of the CC number and the transmission end time for example, at least one piece of DCI with the minimum CC number in the M pieces of DCI is determined as first candidate DCI, at least one piece of DCI with the last transmission end time in the M pieces of DCI is determined as fourth candidate DCI, and one of the first candidate DCI and the second candidate DCI is determined as reference DCI simultaneously.

For another example, each of the combination corresponds to a different weight, and reference DCI is determined from the plurality of pieces of candidate DCI according to the weights. Taking a combination of the CC number, the BWP number, the transmission start time or the transmission end time for example, a weight relationship of the CC number, the BWP number, the transmission start time or the transmission end time is a weight of the CC number > a weight of the BWP> a weight of the transmission start time > a weight of the transmission end time, in which case, at least one piece of first candidate DCI is determined according to the CC number. When there are a plurality of pieces of first candidate DCI, at least one piece of second candidate DCI is selected from the plurality of pieces of first candidate DCI according to the BWP number, and so on, until only one piece of candidate DCI remains, and the last remaining candidate DCI is determined as the reference DCI.

At step 704, when HARQ-ACK information corresponding to the reference DCI is ACK, the unified TCI state used for the communication transmission is determined based on the target TCI state included in the reference DCI.

Optionally, the communication transmission includes an uplink transmission or a downlink transmission of a communication channel, and an uplink transmission or a downlink transmission of a reference signal.

In embodiments of the disclosure, the terminal device determines the unified TCI used for the communication transmission based on the target TCI state included in the reference DCI after a target time interval (a T time) after transmitting the HARQ-ACK codebook. The HARQ-ACK information corresponding to the reference DCI included in the HARQ-ACK codebook is ACK, that is, information of the unified TCI indicated by the reference DCI is correctly received.

The target time interval may be specified by the network device, or preset by the terminal device, or specified based on a protocol. The target time interval may be N transmission symbols.

In some embodiments, when the HARQ-ACK information corresponding to the reference DCI determined is NACK, the terminal device re-determines the reference DCI, or the terminal device re-receives DCI from the network device, to determine the unified TCI used for the communication transmission.

In summary, in the method for determining the TCI according to embodiments of the disclosure, when the terminal device receives the M pieces of DCI from the network device, and each of the M pieces of DCI includes the TCI state, the terminal device determines the unified TCI used for the communication transmission according to the TCI state included in the reference DCI in the M pieces of DCI, where M is a positive integer. That is, when the HARQ-ACK codebook includes the HARQ-ACK information corresponding to the plurality of pieces of DCI, a solution for the problem of how to determine the unified TCI used for the communication transmission is provided, so that the terminal device and the network device reach an agreement in a use time of the TCI state, which ensures consistency of the TCI, and enhances TCI-based transmission performance between the terminal device and the network device.

FIG. 8 is a block diagram illustrating a structure of an apparatus for determining a transmission configuration indication (TCI) according to an example embodiment. As illustrated in FIG. 8, taking the apparatus being applied to a terminal, the apparatus 800 includes a receiving module 810 and a determining module 820.

The receiving module 810 is configured to receive M pieces of downlink control information (DCI) from a network device. Each of the M pieces of DCI includes a TCI state. The M pieces of DCI include reference DCI, where M is a positive integer.

The determining module 820 is configured to determine a unified TCI state used for a communication transmission based on a target TCI state included in the reference DCI.

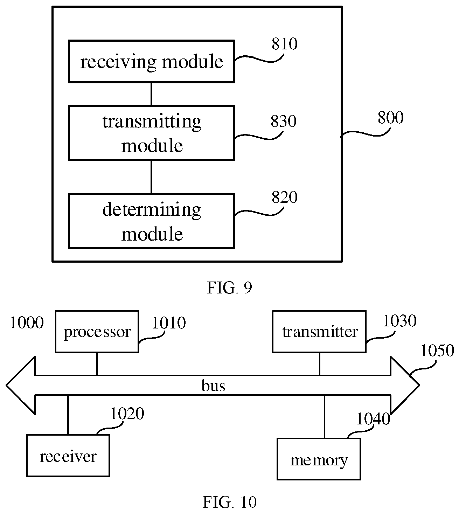

In an example, as illustrated in FIG. 9, the apparatus 800 further includes a transmitting module 830.

The transmitting module 830 is configured to transmit a hybrid automatic repeat request-acknowledge character (HARQ-ACK) codebook to the network device. The HARQ-ACK codebook includes HARQ-ACK information respectively corresponding to the M pieces of DCI.

In an example, TCI states included in all of the M pieces of DCI are same.

In an example, the determining module 820 is further configured to, when HARQ-ACK information corresponding to at least one of the M pieces of DCI is ACK, determine any one of the at least one of the M pieces of DCI as the reference DCI.

The determining module 820 is further configured to determine a unified TCI state used for a communication transmission based on a target TCI state included in the reference DCI.

In an example, TCI states included in N pieces of DCI transmitted in a last slot of transmission slots respectively corresponding to the M pieces of DCI are same, where N is a positive integer.

In an example, the determining module 820 is further configured to, when HARQ-ACK information corresponding to at least one of the N pieces of DCI is ACK, determine any one of the at least one of the N pieces of DCI as the reference DCI.

The determining module 820 is further configured to determine a unified TCI state used for a communication transmission based on a target TCI state included in the reference DCI.

In an example, TCI states included in L pieces of DCI with a last transmission start symbol corresponding to M pieces of DCI are same, where L is a positive integer.

In an example, the determining module 820 is further configured to, when HARQ-ACK information corresponding to at least one of the L pieces of DCI is ACK, determine any one of the at least one of the L pieces of DCI as the reference DCI.

The determining module 820 is further configured to determine a unified TCI state used for a communication transmission based on a target TCI state included in the reference DCI.

In an example, TCI states included in J pieces of DCI with a last transmission end symbol respectively corresponding to the M pieces of DCI are same, where J is a positive integer.

In an example, the determining module 820 is further configured to, when HARQ-ACK information corresponding to at least one of the J pieces of DCI is ACK, determine any one of the at least one of the J pieces of DCI as the reference DCI.

The determining module 820 is further configured to determine a unified TCI state used for a communication transmission based on a target TCI state included in the reference DCI.

In an example, the determining module 820 is further configured to determine the reference DCI according to at least one of component carrier (CC) numbers, bandwidth part (BWP) numbers, transmission start times or transmission end times respectively corresponding to the M pieces of DCI.

In an example, the determining module 820 is further configured to: determine DCI with a minimum CC number in the M pieces of DCI as the reference DCI; and/or, determine DCI with a minimum bandwidth part (BWP) number in the M pieces of DCI as the reference DCI; and/or, determine DCI with a last transmission start time in the M pieces of DCI as the reference DCI; and/or, determine DCI with a last transmission end time in the M pieces of DCI as the reference DCI; and/or, determine DCI with an earliest transmission start time in the M pieces of DCI as the reference DCI; and/or, determine DCI with an earliest transmission end time in the M pieces of DCI as the reference DCI.

In an example, the determining module 820 is further configured to: when HARQ-ACK information corresponding to the reference DCI is ACK, determine the unified TCI state used for the communication transmission based on the target TCI state included in the reference DCI.

In an example, the determining module 820 is further configured to determine the unified TCI state used for the communication transmission based on the target TCI state included in the reference DCI after a target time interval after transmitting the HARQ-ACK codebook. HARQ-ACK information corresponding to the reference DCI included in the HARQ-ACK codebook is ACK.

In an example, the TCI state includes at least one of a unified TCI state, a joint TCI state, a separate uplink TCI state, or a separate downlink TCI state.

FIG. 10 is a structural diagram illustrating a communication device 1000 (may be implemented as the terminal device) according to an example embodiment of the disclosure. The communication device 1000 includes a processor 1010, a receiver 1020, a transmitter 1030, a memory 1040 and a bus 1050.

The processor 1010 includes one or more processing cores. The processor 1010 executes various function applications and information processings by running a software program or a module.

The receiver 1020 and the transmitter 1030 may be implemented as a communication component, which may be a communication chip.

The memory 1040 is communicatively connected to the processor 1010 via the bus 1050.

The memory 1040 may be configured to store at least one instruction, and the processor 1010 is configured to execute the at least one instruction to implement steps executed by a terminal in the above method embodiment, or implement steps executed by a network device in the above method embodiment.

In addition, the memory 1040 may be implemented by any type of volatile or non-volatile storage devices or their combination. The volatile or non-volatile storage device includes but not limited to a magnetic disk or an optical disk, an electrically-erasable programmable read only memory (EEPROM), an erasable programmable read only memory (EPROM), a static random access memory (SRAM), a read-only memory (ROM), a magnetic memory, a flash memory and a programmable read-only memory (PROM).

A system for determining a transmission configuration indication (TCI) is further provided in an example embodiment of the disclosure. The system includes a terminal. The terminal includes apparatuses for determining the TCI according to embodiments of FIG. 8 and FIG. 9.

A computer-readable storage medium is further provided in an example embodiment of the present disclosure. The computer-readable storage medium stores at least one instruction, at least one program, a code set and an instruction set, the at least one instruction, the at least one program, the code set or the instruction set being loaded and executed by the processor to implement steps executed by the terminal in the method for determining the TCI provided in each of the method embodiments.

It should be understood that, "a plurality of" mentioned in this disclosure refers to two or more. "and/or", describes the relationship of the association objects, indicating that there may exist three relationships, for example, A and/or B, may represent: any of existing A only, existing both A and B, or existing B only. The character "/" generally means the contextual object is a kind of "or" relationship.

After considering the specification and practicing the disclosure here, those skilled in the art will easily think of other implementations. The present application is intended to cover any variations, usages, or adaptive changes of the present disclosure. These variations, usages, or adaptive changes follow the general principles of the present disclosure and include common knowledge or conventional technical means in the technical field not disclosed by the present disclosure. The description and the embodiments are to be regarded as exemplary only, and the true scope and spirit of embodiments in the present disclosure are given by the appended claims.

It should be understood that the present disclosure is not limited to the precise structure described above and shown in the drawings, and various modifications and changes may be made without departing from its scope. The scope of the present application is only limited by the appended claims. The scope of the present disclosure is only limited by the appended claims.

## Claims

1. A method for determining a transmission configuration indication (TCI), applied to a terminal device, comprising:
receiving M pieces of downlink control information (DCI) from a network device, wherein each of the M pieces of DCI comprises a TCI state, and the M pieces of DCI comprise reference DCI, where M is a positive integer; and
determining a unified TCI state used for a communication transmission based on a target TCI state comprised in the reference DCI.

2. The method according to claim 1, further comprising:
transmitting a hybrid automatic repeat request-acknowledge character (HARQ-ACK) codebook to the network device, wherein the HARQ-ACK codebook comprises HARQ-ACK information respectively corresponding to the M pieces of DCI.

3. The method according to claim 2, wherein TCI states comprised in all of the M pieces of DCI are same.

4. The method according to claim 3, wherein determining the unified TCI state used for the communication transmission based on the target TCI state comprised in the reference DCI comprises:
when HARQ-ACK information corresponding to at least one of the M pieces of DCI is ACK, determining any one of the at least one of the M pieces of DCI as the reference DCI; and
determining the unified TCI state used for the communication transmission based on the target TCI state comprised in the reference DCI.

5. The method according to claim 2, wherein TCI states comprised in N pieces of DCI transmitted in a last slot of transmission slots respectively corresponding to the M pieces of DCI are same, where N is a positive integer.

6. The method according to claim 5, wherein determining the unified TCI state used for the communication transmission based on the target TCI state comprised in the reference DCI comprises:
when HARQ-ACK information corresponding to at least one of the N pieces of DCI is ACK, determining any one of the at least one of the N pieces of DCI as the reference DCI; and
determining the unified TCI state used for the communication transmission based on the target TCI state comprised in the reference DCI.

7. The method according to claim 2, wherein TCI states comprised in L pieces of DCI with a last transmission start symbol respectively corresponding to the M pieces of DCI are same, where L is a

8. The method according to claim 7, wherein determining the unified TCI state used for the communication transmission based on the target TCI state comprised in the reference DCI comprises:
when HARQ-ACK information corresponding to at least one of the L pieces of DCI is ACK, determining any one of the at least one of the L pieces of DCI as the reference DCI; and
determining the unified TCI state used for the communication transmission based on the target TCI state comprised in the reference DCI.

9. The method according to claim 2, wherein TCI states comprised in J pieces of DCI with a last transmission end symbol respectively corresponding to the M pieces of DCI are same, where J is a positive integer.

10. The method according to claim 9, wherein determining the unified TCI state used for the communication transmission based on the target TCI state comprised in the reference DCI comprises:
when HARQ-ACK information corresponding to at least one of the J pieces of DCI is ACK, determining any one of the at least one of the J pieces of DCI as the reference DCI; and
determining the unified TCI state used for the communication transmission based on the target TCI state comprised in the reference DCI.

11. The method according to claim 2, further comprising:
determining the reference DCI according to at least one of component carrier (CC) numbers, bandwidth part (BWP) numbers, transmission start times or transmission end times respectively corresponding to the M pieces of DCI.

12. The method according to claim 11, wherein determining the reference DCI according to at least one of the CC numbers, the BWP numbers, the transmission start times or the transmission end times respectively corresponding to the M pieces of DCI comprises:
determining DCI with a minimum CC number in the M pieces of DCI as the reference DCI;
or,
determining DCI with a minimum bandwidth part (BWP) number in the M pieces of DCI as the reference DCI;
or,
determining DCI with a last transmission start time in the M pieces of DCI as the reference DCI;
or,
determining DCI with a last transmission end time in the M pieces of DCI as the reference DCI;
determining DCI with an earliest transmission start time in the M pieces of DCI as the reference DCI;
or,
determining DCI with an earliest transmission end time in the M pieces of DCI as the reference DCI.

13. The method according to claim 12, wherein determining the unified TCI state used for the communication transmission based on the target TCI state comprised in the reference DCI comprises:
when HARQ-ACK information corresponding to the reference DCI is ACK, determining the unified TCI state used for the communication transmission based on the target TCI state comprised in the reference DCI.

14. The method according to any one of claims 2 to 13, wherein determining the unified TCI state used for the communication transmission based on the target TCI state comprised in the reference DCI comprises:
determining the unified TCI state used for the communication transmission based on the target TCI state comprised in the reference DCI after a target time interval after transmitting the HARQ-ACK codebook, wherein HARQ-ACK information corresponding to the reference DCI comprised in the HARQ-ACK codebook is ACK.

15. The method according to any one of claims 1 to 13, wherein the TCI state comprises at least one of a unified TCI state, a joint TCI state, a separate uplink TCI state, or a separate downlink TCI state.

16. An apparatus for determining a transmission configuration indication (TCI), comprising:
a receiving module, configured to receive M pieces of downlink control information (DCI) from a network device, wherein each of the M pieces of DCI comprises a TCI state, and the M pieces of DCI comprise reference DCI, where M is a positive integer; and
a determining module, configured to determine a unified TCI state used for a communication transmission based on a target TCI state comprised in the reference DCI.

17. A terminal, comprising:
a processor; and
a transceiver connected to the processor;
wherein the processor is configured to load and execute executable instructions to implement the method for determining the transmission configuration indication according to any one of claims 1 to 15.

18. A computer-readable storage medium storing at least one instruction, at least one program, a code set or an instruction set, wherein the at least one instruction, the at least one program, the code set or the instruction set is loaded and executed by a processor to implement the method for determining the transmission configuration indication according to any one of claims 1 to 15.
